# EUROPEAN PATENT APPLICATION

(11) **EP 4 679 342 A1**
(43) Date of publication of application: **14.01.2026**
(21) Application number: 25188446.6
(22) Date of filing: 09.07.2025
(51) Int. Cl.: G06Q 10/0631, G06Q 10/08, G06Q 50/40

(54) **FLEET MANAGEMENT SYSTEM FOR AN AIRPORT**

(30) Priority: 09.07.2024 US 202463669025 P
(71) Applicant: Pattern Labs, Erie, CO 80516 (US)
(72) Inventor: Gandhi, Arjun, Erie, Colorado, 80516 (US); Pratt Jr., John Charles, Erie, Colorado, 80516 (US); Kenwood, Corinne, Erie, Colorado, 80516 (US); Schroeter, Kellen, Erie, Colorado, 80516 (US); Taylor, Travis, Erie, Colorado, 80516 (US); Hemphill, Riley, Erie, Colorado, 80516 (US); Klingner, John, Erie, Colorado, 80516 (US); Hoffman, Andrew, Erie, Colorado, 80516 (US); Gira, Thomas, Erie, Colorado, 80516 (US)
(74) Representative: Grünecker Patent- und Rechtsanwälte PartG mbB

(57) **Abstract**

Examples provide an airport operations management system including a fleet management device including an electronic processor configured to receive first operational data from an airport operational data source. Based on the first operational data, the electronic processor determines a set of tasks for transporting aircraft baggage, and a predicted traffic flow of a plurality of fleet vehicles and a plurality of aircrafts operating in an airport. Based on the predicted traffic flow, the electronic processor assigns the set of tasks to a fleet device associated with an autonomous fleet vehicle of the plurality of fleet vehicles, and transmits instructions for executing the set of tasks to the fleet device for display on a display screen of the fleet device. The autonomous fleet vehicle includes a transportation system configured to operate according to the instructions for executing the set of tasks.

## Description

### RELATED APPLICATIONS

This application claims priority to U.S. Provisional Application No. 63/669,025, filed on July 9, 2024, the entire contents of which are hereby incorporated by reference.

### BACKGROUND

Operational efficiency of airports is impacted by a variety of factors such as weather, staffing availability, flight delays, gate availability, vehicle availability, tarmac traffic, and the like.

### SUMMARY

Examples described herein relate to an airport operations management system including: a fleet management device including an electronic processor configured to: receive first operational data from an airport operational data source, based on the first operational data, determine a set of tasks for transporting aircraft baggage, based on the first operational data, determine a predicted traffic flow of a plurality of fleet vehicles and a plurality of aircrafts operating in an airport, based on the predicted traffic flow, assign the set of tasks to a fleet device associated with an autonomous fleet vehicle of the plurality of fleet vehicles, and transmit instructions for executing the set of tasks to the fleet device, wherein transmitting the instructions for executing the set of tasks to the fleet device causes the instructions to be displayed on a display screen of the fleet device; and the autonomous fleet vehicle including a transportation system configured to operate according to the instructions for executing the set of tasks.

In some aspects, the techniques described herein relate to an airport operations management system, wherein the electronic processor is further configured to: based on the predicted traffic flow, determine a desired route for navigating the autonomous fleet vehicle to a task execution location for the set of tasks, wherein the instructions for executing the set of tasks include the desired route.

In some aspects, the techniques described herein relate to an airport operations management system, wherein the electronic processor is configured to assign the set of tasks to the fleet device associated with the autonomous fleet vehicle in response to determining that the autonomous fleet vehicle has a shortest predicted travel time of the plurality of fleet vehicles to the task execution location.

In some aspects, the techniques described herein relate to an airport operations management system, wherein the first operational data includes a baggage manifest, and the electronic processor is configured to assign the set of tasks to the fleet device associated with the autonomous fleet vehicle in response to determining that aircraft baggage has a connection that departs within a threshold period of time and in response to determining that the autonomous fleet vehicle is available to complete the set of tasks within the threshold period of time.

In some aspects, the techniques described herein relate to an airport operations management system, wherein the first operational data includes charge or fuel information of the plurality of fleet vehicles, and the electronic processor is configured to assign the set of tasks to the fleet device associated with the autonomous fleet vehicle in response to determining that the autonomous fleet vehicle has a charge or fuel level above a threshold.

In some aspects, the techniques described herein relate to an airport operations management system, wherein the task execution location is a first gate location of a first aircraft with bags to be unloaded, and wherein the set of tasks includes a first task for driving to the first gate location, a second task for unloading selected baggage from the first aircraft, a third task for driving to a second gate location of a second aircraft, and a fourth task for loading the selected baggage onto the second aircraft.

In some aspects, the techniques described herein relate to an airport operations management system, wherein the electronic processor is further configured to: receive second operational data from the airport operational data source, based on the second operational data, modify the desired route, and transmit modified instructions for executing the set of tasks, the modified instructions including a modified desired route; wherein the second operational data includes at least one selected from a group consisting of: task execution data received from the fleet device and associated with an execution progress of the set of tasks, a gate location change, a flight arrival time change, a flight departure time change, and a traffic pattern change.

Examples described herein relate to a method for airport operations management, the method including: receiving, with an electronic processor of a fleet management device, first operational data from an airport operational data source; based on the first operational data, determining, with the electronic processor, a set of tasks for transporting aircraft baggage; based on the first operational data, determining, with the electronic processor, a predicted traffic flow of a plurality of fleet vehicles and a plurality of aircrafts operating in an airport; based on the predicted traffic flow, assigning, with the electronic processor, the set of tasks to a fleet device associated with an autonomous fleet vehicle of the plurality of fleet vehicles; transmitting, with the electronic processor via a transceiver of the fleet management device, instructions for executing the set of tasks to the fleet device, wherein transmitting the instructions for executing the set of tasks to the fleet device causes the instructions to be displayed on a display screen of the fleet device; and operating a transportation system of the autonomous fleet vehicle according to the instructions for executing the set of tasks.

In some aspects, the techniques described herein relate to a method, further including: based on the predicted traffic flow, determining, with the electronic processor, a desired route for navigating the autonomous fleet vehicle to a task execution location for the set of tasks, wherein the instructions for executing the set of tasks include the desired route.

In some aspects, the techniques described herein relate to a method, wherein assigning the set of tasks to the fleet device associated with the autonomous fleet vehicle is performed in response to determining that the autonomous fleet vehicle has a shortest predicted travel time of the plurality of fleet vehicles to the task execution location.

In some aspects, the techniques described herein relate to a method, wherein the first operational data includes a baggage manifest, and wherein assigning the set of tasks to the fleet device associated with the autonomous fleet vehicle is performed in response to determining that aircraft baggage has a connection that departs within a threshold period of time and in response to determining that the autonomous fleet vehicle is available to complete the set of tasks within the threshold period of time.

In some aspects, the techniques described herein relate to a method, wherein the first operational data includes charge or fuel information of the plurality of fleet vehicles, and wherein assigning the set of tasks to the fleet device associated with the autonomous fleet vehicle is performed in response to determining that the autonomous fleet vehicle has a charge or fuel level above a threshold.

In some aspects, the techniques described herein relate to a method, wherein the task execution location is a first gate location of a first aircraft with bags to be unloaded, and wherein the set of tasks includes a first task for driving to the first gate location, a second task for unloading selected baggage from the first aircraft, a third task for driving to a second gate location of a second aircraft, and a fourth task for loading the selected baggage onto the second aircraft.

In some aspects, the techniques described herein relate to a method, further including: receive second operational data from the airport operational data source, based on the second operational data, modify the desired route, and transmit modified instructions for executing the set of tasks, the modified instructions including a modified desired route; wherein the second operational data includes at least one selected from a group consisting of: task execution data received from the fleet device and associated with an execution progress of the set of tasks, a gate location change, a flight arrival time change, a flight departure time change, and a traffic pattern change.

Examples described herein relate to a fleet device that forms part of an airport operations management system, the fleet device including: a fleet device transceiver; a positioning device; a peripheral device connection interface; a display screen; and an electronic processor coupled to the fleet device transceiver, the positioning device, the peripheral device connection interface, and the display screen, wherein the electronic processor is configured to: transmit, via the fleet device transceiver and to a fleet management device, operational data of the fleet device, wherein the operational data is received via the positioning device, the peripheral device connection interface, or both the positioning device and the peripheral device connection interface, receive, via the fleet device transceiver and from the fleet management device, a mission including a set of tasks for transporting aircraft baggage, and control, based on the set of tasks, the display screen to display a graphical user interface that simultaneously displays: a map including a route overview of a route to be traveled by a fleet vehicle associated with the fleet device to perform the mission, a task list including the set of tasks, wherein each task on the task list includes a status indication configured to indicate one of (i) the task having been completed, (ii) the task actively being executed, or (iii) the task occurring in the future, a mission overview including a mission type and a mission completion deadline, and task details related to an active task being performed, wherein the task details include a task execution location of the active task, a task type of the active task, and an indication of an amount of time that has been spent performing the active task.

In some aspects, the techniques described herein relate to a fleet device, wherein the electronic processor is configured to: determine that a first task of the set of tasks has been completed; update, in response to determining that the first task has been completed, the graphical user interface to indicate that the first task has been completed and that a second task is active; and transmit, in response to determining that the first task has been completed, the operational data of the fleet device to the fleet management device, wherein the operational data indicates that the first task has been completed.

In some aspects, the techniques described herein relate to a fleet device, wherein the electronic processor is configured to determine that the first task has been completed by monitoring the peripheral device connection interface for data from a baggage tag scanner.

In some aspects, the techniques described herein relate to a fleet device, wherein the electronic processor is configured to: determine a delay in completion of a first task of the set of tasks; and transmit, in response to determining that the completion of the first task has been delayed, the operational data of the fleet device to the fleet management device, wherein the operational data indicates that the first task has been delayed.

In some aspects, the techniques described herein relate to a fleet device, wherein the electronic processor is configured to: determine that at least one bag was not moved during execution of a first task; and in response to determining that the at least one bag was not moved during execution of the first task, provide a notification via an output interface of the fleet device.

In some aspects, the techniques described herein relate to a fleet device, wherein the electronic processor is configured to control the display screen to display the graphical user interface that additionally simultaneously displays an origin of the mission and one or more destinations of the mission.

In some aspects, the techniques described herein relate to a fleet device, wherein the status indication includes an icon that is updated by the electronic processor in response to determining that the task has been completed.

In some aspects, the techniques described herein relate to a fleet device, wherein the electronic processor is configured to: receive, via the fleet device transceiver and from the fleet management device, modified mission data including at least one of a group consisting of a reordering of the set of tasks, an additional task, a removed task, or combinations thereof; and update, in response to receiving the modified mission data, the graphical user interface to display the modified mission data.

In some aspects, the techniques described herein relate to a fleet device, wherein the route to be traveled by the fleet vehicle is determined based on a current or predicted traffic flow of vehicles at an airport.

Other aspects of the invention will become apparent by consideration of the detailed description and accompanying drawings.

### BRIEF DESCRIPTION OF THE DRAWINGS

FIG. 1 is a block diagram of an airport operations management system, according to some examples.
FIG. 2 is a block diagram of an airport operations server, according to some examples.
FIG. 3 is a block diagram of a fleet management device, according to some examples.
FIG. 4 is a block diagram of a fleet device, according to some examples.
FIG. 5 illustrates a fleet device, according to some examples.
FIG. 6 illustrates a vehicle including a fleet device, according to some examples.
FIG. 7 illustrates a method for assigning tasks to a fleet device, according to some examples.
FIG. 8 illustrates a method for tracking execution of operational tasks in an airport, according to some examples.
FIG. 9 illustrates a method for simulating airport operations, according to some examples.

### DETAILED DESCRIPTION

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software-based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology (e.g., "about," "approximately," "substantially," etc.) may refer to plus or minus a percentage (e.g., 1%, 5%, 10%, or more) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

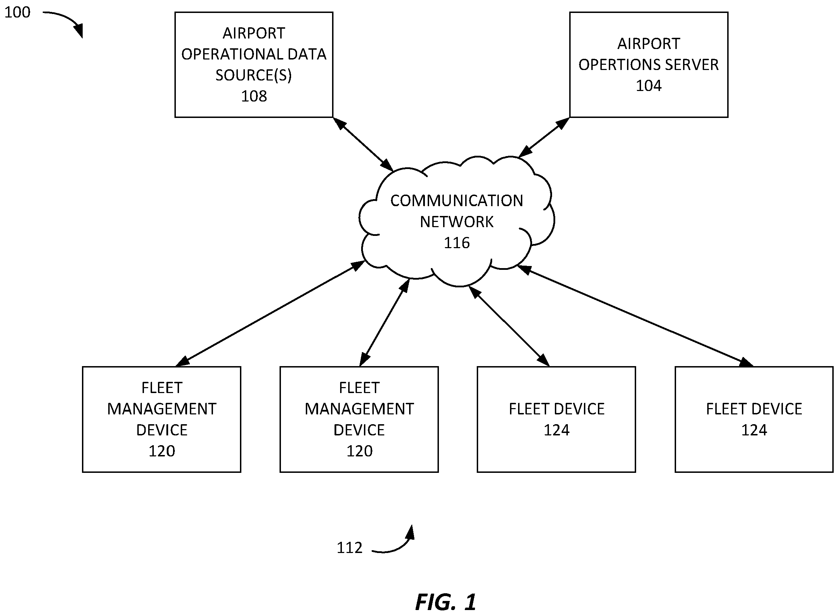

FIG. 1 illustrates an example airport operations management system 100 for an airport. The system 100 includes an airport operations server 104 communicatively connected to one or more airport operational data sources 108, and one or more airport operations devices 112 by means of a communication network 116. The communication network 116 may include various types of wired or wireless networks or interconnections, such as, for example, a cellular network, a wide area network (such as, for example, the Internet), a local area network (such as, for example, a Wi-Fi^{®} network), a short-range wireless network or connection (such as, for example, a Bluetooth^{®} connection or near-field connection), or a combination of the foregoing. It should be understood that, in some embodiments, one or more dedicated connections or communication channels may be used as the communication network 116 between one or more of the components of the system 100.

The airport operations server 104 may receive airport operational data (otherwise referred to herein as operational data) from the airport operational data sources 108 using one or more application programming interfaces (APIs) associated with respective data sources. The airport operational data provided by the airport operational data sources 108 may include, for example, weather data, flight information (FLIFO) data, bag/cargo manifests (e.g., baggage manifest) associated with arriving and/or departing flights (e.g., provided by airlines), passenger manifests associated with arriving and/or departing flights (e.g., provided by airlines), airport staff information, airline crew information, airport vehicle data (e.g., numbers and types of vehicles operating in the airport), operational status of airport vehicles (e.g., charge or fuel level of vehicles, locations of vehicles, etc.), gate scheduling data, historical data associated with operational efficiency of the airport, and/or the like.

A weather data source may include, for example, a publicly available weather data source associated with a location of the airport, locations of departure airports associated with arriving flights, locations of arrival airports associated with departing flights, and/or locations associated with flightpaths of arriving or departing flights.

A FLIFO data source may include, for example, a FLIFO data source managed by the airport, a FLIFO data source managed by a third party flight tracker, a FLIFO data source managed by an airline operating at the airport, and/or the like. The FLIFO data may include, for example, scheduled flight departure times, scheduled flight arrival times, actual flight departure times, actual flight arrival times, flight delay information, and/or the like.

Other data sources included in the airport operational data sources 108 may include, for example, data provided by the airport operations server 104 and/or the airport operations devices 112 via the communication network 116.

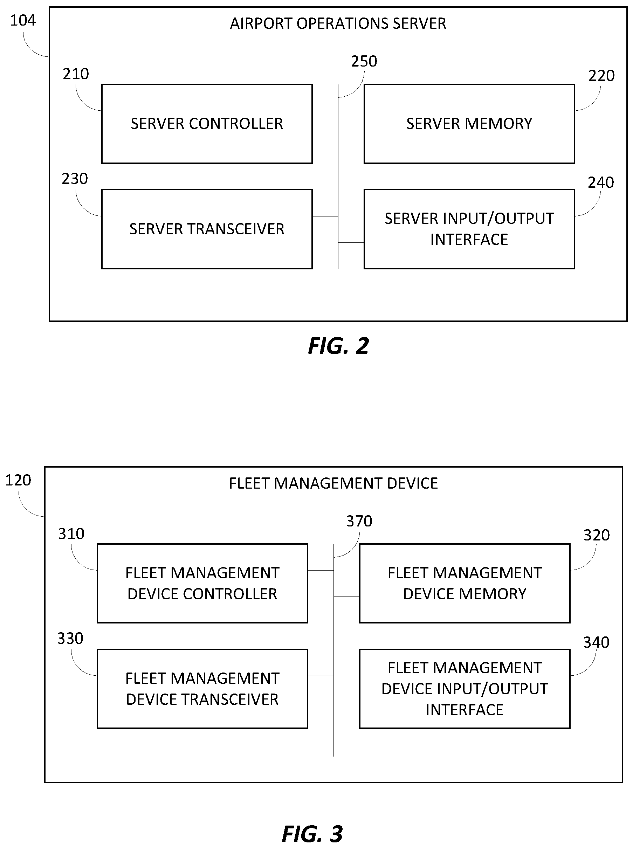

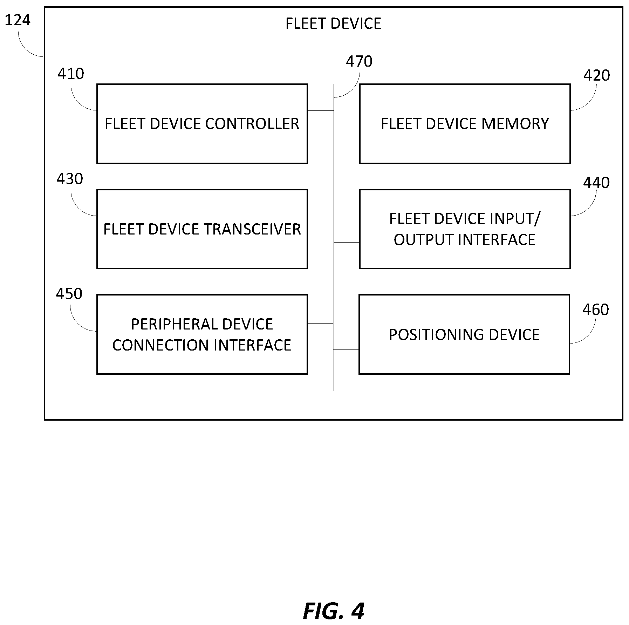

The airport operations devices 112, described in greater detail with respect to FIGS. 3 and 4, may include one or more fleet management devices 120 communicatively connected to one or more fleet devices 124. Each fleet device 124 may be associated with a respective fleet vehicle and/or individual operating in the airport.

FIG. 2 is a simplified block diagram of an example airport operations server 104. In the example illustrated, the airport operations server 104 includes a server controller 210, a server memory 220, a server transceiver 230, and a server input/output interface 240. The server controller 210, the server memory 220, the server transceiver 230, and the server input/output interface 240 communicate over one or more control and/or data buses (for example, a communication bus 250). The airport operations server 104 may include more or fewer components than those shown in FIG. 2 and may perform additional functions other than those described herein.

In some embodiments, the server controller 210 (e.g., an electronic processor) is implemented as a microprocessor with separate memory, such as the server memory 220. In other embodiments, the server controller 210 may be implemented as a microcontroller (with server memory 220 on the same chip). In other embodiments, the server controller 210 may be implemented using multiple processors. In addition, the server controller 210 may be implemented partially or entirely as, for example, a field programmable gate array (FPGA), an applications-specific integrated circuit (ASIC), and the like and the server memory 220 may not be needed or may be modified accordingly. In the example illustrated, the server memory 220 includes non-transitory, computer-readable memory that stores instructions that are received and executed by the server controller 210 to carry out the functionality of the airport operations server 104 described herein. The server memory 220 may include, for example, a program storage area and a data storage area. The program storage area and the data storage area may include combinations of different types of memory, such as read-only memory, and random-access memory. In some embodiments, the airport operations server 104 may include one server controller 210, and/or plurality of server controllers 210, for example, in a cluster arrangement, one or more of which may be executing none, all, or a portion of the applications of the fleet management server 104 described below, sequentially or in parallel across the one or more server controllers 210. The one or more server controllers 210 comprising the fleet management server 104 may be geographically co-located or may be geographically separated and interconnected via electrical and/or optical interconnects. One or more proxy servers or load balancing servers may control which one or more server controllers 210 perform any part or all of the applications provided below.

The server transceiver 230 enables wired and/or wireless communication between the airport operations server 104, the airport operations devices 112, and the airport operational data sources 108. In some embodiments, the server transceiver 230 may comprise separate transmitting and receiving components, for example, a transmitter and a receiver. The server input/output interface 240 may include one or more input mechanisms (for example, a touch pad, a keypad, a joystick, and the like), one or more output mechanisms (for example, a display, a speaker, and the like) or a combination of the two (for example, a touch screen display).

FIG. 3 is a simplified block diagram of an example fleet management device 120. In the example illustrated, the fleet management device 120 includes a fleet management device controller 310, a fleet management device memory 320, a fleet management device transceiver 330, and a fleet management device input/output interface 340. The components of the fleet management device 120 communicate over one or more control and/or data buses (for example, a communication bus 370). The fleet management device 120 may include more or fewer components than those shown in FIG. 3 and may perform additional functions other than those described herein.

In some embodiments, the fleet management device controller 310 (e.g., an electronic processor) is implemented as a microprocessor with separate memory, such as the fleet management device memory 320. In other embodiments, the fleet management device controller 310 may be implemented as a microcontroller (with fleet management device memory 320 on the same chip). In other embodiments, the fleet management device controller 310 may be implemented using multiple processors. In addition, the fleet management device controller 310 may be implemented partially or entirely as, for example, a field programmable gate array (FPGA), an applications-specific integrated circuit (ASIC), and the like and the fleet management device memory 320 may not be needed or may be modified accordingly. In the example illustrated, the fleet management device memory 320 includes non-transitory, computer-readable memory that stores instructions that are received and executed by the fleet management device controller 310 to carry out the functionality of the fleet management device 120 described herein. The fleet management device memory 320 may include, for example, a program storage area and a data storage area. The program storage area and the data storage area may include combinations of different types of memory, such as read-only memory, and random-access memory. In some embodiments, the fleet management device 120 may include one fleet management device controller 310, and/or plurality of fleet management device controllers 310, for example, in a cluster arrangement, one or more of which may be executing none, all, or a portion of the applications of the fleet management device 120 described below, sequentially or in parallel across the one or more fleet management device controllers 310.

The fleet management device transceiver 330 enables wired and/or wireless communication between the airport operations server 104, other airport operations devices 112, and/or the airport operational data sources 108. In some embodiments, the fleet management device transceiver 330 may comprise separate transmitting and receiving components, for example, a transmitter and a receiver. The fleet management device input/output interface 340 may include one or more input mechanisms (for example, a touch pad, a keypad, a joystick, and the like), one or more output mechanisms (for example, a display, a speaker, and the like) or a combination of the two (for example, a touch screen display).

Each fleet management device 120 may be implemented using a suitable computer device. For example, one or more fleet management devices 120 may be implemented using a portable handheld device (e.g., a smartphone, a tablet, etc.), a personal computer (e.g., a desktop computer or laptop) having airport operational applications installed thereon, or using one or more servers. In operation, the fleet management device 120 may be stationed in a control room, a server room, or carried by airport staff (e.g., airport operations managers assigned to the fleet management device 120).

FIG. 4 is a simplified block diagram of an example fleet device 124. In the example illustrated, the fleet device 124 includes a fleet device controller 410, a fleet device memory 420, a fleet device transceiver 430, a fleet device input/output interface 440, a peripheral device connection interface 450, and a positioning device 460. The components of the fleet device 124 communicate over one or more control and/or data buses (for example, a communication bus 470). The fleet device 124 may include more or fewer components than those shown in FIG. 4 and may perform additional functions other than those described herein.

In some embodiments, the fleet device controller 410 (e.g., an electronic processor) is implemented as a microprocessor with separate memory, such as the fleet device memory 420. In other embodiments, the fleet device controller 410 may be implemented as a microcontroller (with fleet device memory 420 on the same chip). In other embodiments, the fleet device controller 410 may be implemented using multiple processors. In addition, the fleet device controller 410 may be implemented partially or entirely as, for example, a field programmable gate array (FPGA), an applications-specific integrated circuit (ASIC), and the like and the fleet device memory 420 may not be needed or may be modified accordingly. In the example illustrated, the fleet device memory 420 includes non-transitory, computer-readable memory that stores instructions that are received and executed by the fleet device controller 410 to carry out the functionality of the fleet device 124 described herein. The fleet device memory 420 may include, for example, a program storage area and a data storage area. The program storage area and the data storage area may include combinations of different types of memory, such as read-only memory, and random-access memory. In some embodiments, the fleet device 124 may include one fleet device controller 410, and/or plurality of fleet device controllers 410, for example, in a cluster arrangement, one or more of which may be executing none, all, or a portion of the applications of the fleet device 124 described below, sequentially or in parallel across the one or more fleet device controllers 410.

The fleet device transceiver 430 enables wired and/or wireless communication between the airport operations server 104, other airport operations devices 112, and/or the airport operational data sources 108. In some embodiments, the fleet device transceiver 430 may comprise separate transmitting and receiving components, for example, a transmitter and a receiver. The fleet device input/output interface 240 may include one or more input mechanisms (for example, a touch pad, a keypad, a joystick, and the like), one or more output mechanisms (for example, a display, a speaker, and the like) or a combination of the two (for example, a touch screen display).

The peripheral device connection interface 450 communicatively connects the fleet device 124 to other electronic devices associated with the fleet device 124. For example, the peripheral device connection interface 450 may include a Bluetooth device, a near field communication (NFC) device, a controller area network (CAN) bus connection interface for communicatively to a fleet vehicle associated with the fleet device 124, and/or other devices for connecting to peripheral devices. Peripheral devices connectable to the peripheral device connection interface 450 include, for example, one or more components of a fleet vehicle associated with the airport operations device 112 (e.g., a Bluetooth-capable on-board diagnostics (OBD) device, universal serial bus (USB) device, or other after-market device), a wireless barcode reader used for scanning luggage and other cargo loaded on to or off of an aircraft, one or more cameras mounted to the fleet vehicle associated with the airport operations device, and/or the like.

The positioning device 460 includes one or more positioning sensors for locating the fleet device 124, such as, for example, one or more global positioning system (GPS) sensors, one or more radar sensors, one or more lidar sensors, one or more inertial measurement units (IMUs), one or more ultrasonic sensors, one or more magnetometers, one or more accelerometers, one or more gyroscopes, one or more proximity sensors, one or more indoor positioning system (IPS) devices, or a combination thereof.

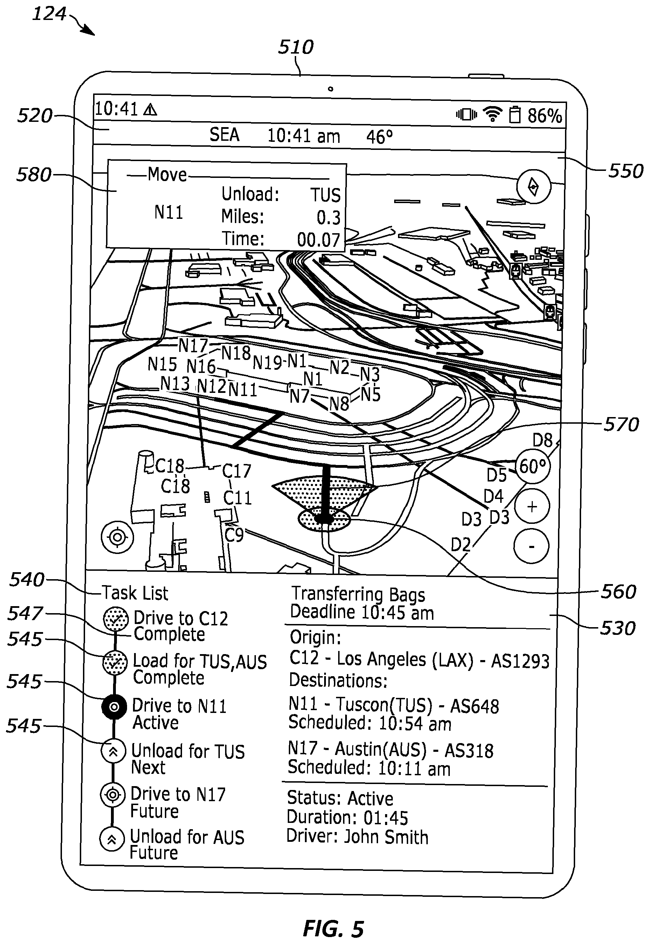

Each fleet device 124 may be implemented using a suitable computer device. For example, one or more fleet device 124 may be implemented using a portable handheld device (e.g., a smartphone, a tablet, etc.) and/or a personal computer (e.g., a desktop computer or laptop) having airport operational applications installed thereon. FIG. 5 illustrates an example fleet device 124 implemented as a tablet (e.g., a ruggedized tablet) having a housing 510 and a display screen 520 (e.g., a touch screen) configured to display a graphical user interface (GUI) associated with an airport operations application, described in greater detail below.

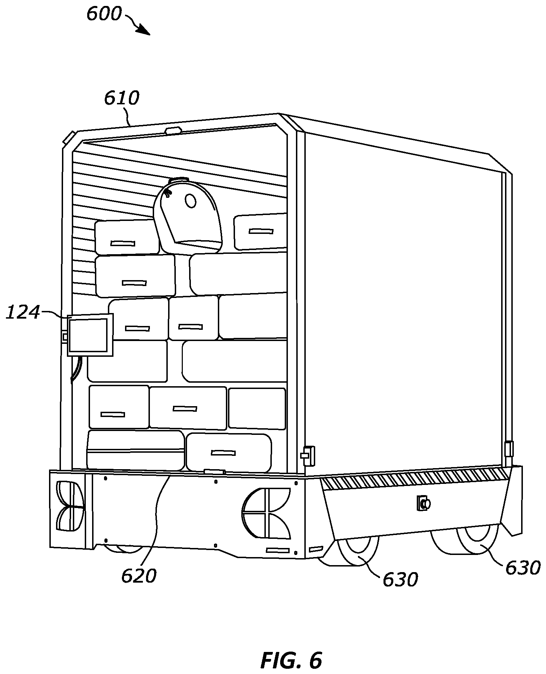

In operation, the fleet device 124 may be stationed near an airline gate for use by airport or airline staff, be fixedly or releasably attached to a fleet vehicle associated with the fleet device 124, or be carried by airport staff assigned to the fleet device 124. Fleet vehicles associated with the fleet device 124 may include, for example, cargo trucks, deicing vehicles, catering trucks, aircraft tugs, baggage tugs, passenger shuttles, and/or the like. FIG. 6 illustrates one such example of a fleet vehicle 600 associated with a fleet device 124 that is affixed to the fleet vehicle 600.

In the illustrated example, the fleet vehicle 600 is an autonomous fleet vehicle 600 having a housing 610 and a load-bearing platform 620 for supporting and transporting baggage throughout an airport. While the example illustrated in FIG. 6 is an autonomous fleet vehicle 600, other fleet vehicles associated with other fleet devices 124 may be manually operated, semi-autonomously operated, or remotely operated.

The fleet device 124 communicates with one or more fleet management devices 120 and/or the airport operations server 104 to receive instructions for executing various tasks within the airport and for providing operational data to the one or more fleet management devices 120 and/or the airport operations server 104. The tasks include, for example, a fleet vehicle (e.g., the autonomous fleet vehicle 600) or a driver of a fleet vehicle driving to predetermined locations within the airport (e.g., particular gates, baggage carousels, etc.), loading or unloading baggage for particular flights, collecting and shuttling passengers to predetermined locations in the airport, and/or the like. Tasks are assigned to the fleet device 124 by the fleet management device 120 based on operational data provided to the fleet management device 120 by the airport operational data sources 108 (e.g., including fleet devices 124 that monitor operational data of the fleet vehicle 600 and other fleet vehicles 600) and/or the airport operations server 104, and fleet devices 124 that monitor operational data of the fleet vehicle 600 and other fleet vehicles 600.

Each fleet vehicle 600 may have similar components as the fleet device 124 as shown in FIG. 4 and described above with respect to FIG. 4. For example, each fleet vehicle 600 may include its own controller, memory, transceiver, input/output interface, and/or positioning device that perform similar functions as the like-named devices described previously herein. In some instances, the fleet device 124 is integrated into the fleet vehicle 600 such that the controller 410 of the fleet device 124 also acts as a controller for components of the fleet vehicle 600. For example, the fleet vehicle 600 may include a transportation system 630 (e.g., motorized wheels, motorized tracks or treads, etc.) configured to move the fleet vehicle 600 throughout the airport. The controller 410 of the fleet device 124 may be configured to control the transportation system 630 of the fleet vehicle in some instances. In other instances, the fleet vehicle 600 may have its own controller that communicates with the controller 410 of the fleet device 124 to receive task and/or movement instructions (e.g., wirelessly, via a docking station connection included in/on the fleet vehicle 600 and that removably receives the fleet device 124, and/or the like). An electronic processor/controller of the fleet device 124 and/or of the fleet vehicle 600 may be configured to control the transportation system 630 to operate according to instructions for executing a set of tasks as described herein. In some instances, one or more fleet vehicles 600 includes components in different arrangements and/or includes additional or alternative components than the components shown in FIG. 4 with respect to the fleet device 124.

In some instances, the controllers (e.g., electronic processors) described herein may include multiple controllers/electronic processors within a single device (e.g., the fleet management device 120, the fleet device 124, the fleet vehicle 600, etc.) that together function to perform various tasks/operations. In some instances, the controllers/electronic processors described herein are implemented within a distributed system including one or more components located within a single device and/or external to the single devices (i.e., included in other devices). For example, in some instances, the fleet device 124 (e.g., the fleet device controller 410) includes local hardware components and one or more external hardware components (e.g., one or more electronic processors of the fleet vehicle 600). In other words, the controllers/electronic processors disclosed herein may include any one or a combination of controllers/electronic processors located within a single device (e.g., the fleet management device 120, the fleet device 124, the fleet vehicle 600, etc.) or distributed among various devices and/or systems. For example, the fleet device controller 410 may include a first electronic processor of the fleet device 124, a second electronic processor of the fleet vehicle 600, or both the first electronic processor and the second electronic processor. Thus, in the claims, if an apparatus or system is claimed, for example, as including an electronic processor or other element configured in a certain manner, for example, to make multiple determinations, the claim or claim element should be interpreted as meaning one or more electronic processors (or other element) where any one of the one or more electronic processors (or other element) is configured as claimed, for example, to make some or all of the multiple determinations. To reiterate, those electronic processors and processing may be distributed within a single device or across multiple devices.

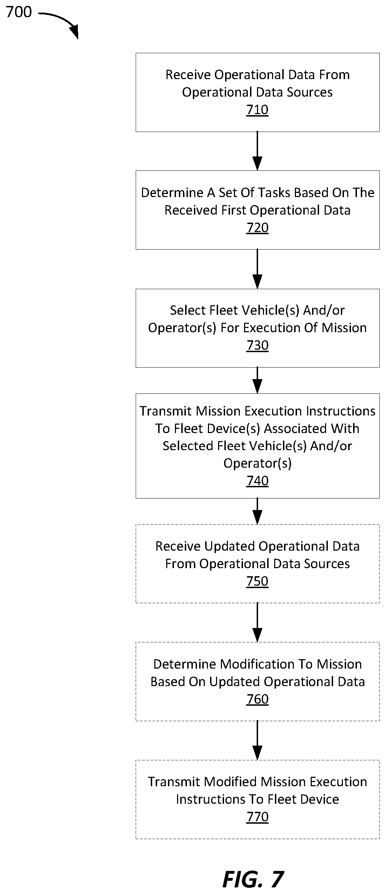

FIG. 7 illustrates a flowchart of an example method 700 for fleet management at an airport. The method 700 may be performed by, for example, a fleet management device 120. In the example illustrated, the method 700 includes receiving, with the fleet management device controller 310, operational data from the operational data sources 108 (at block 710). The operational data may be substantially similar to the operational data described above with respect to FIG. 1. For example, the operational data may include weather data, FLIFO data, bag/cargo manifests, passenger manifests, airport staff information, airline crew information, gate scheduling data, historical data associated with operational efficiency of the airport, and/or the like. The operational data may also include information related to the location and status of fleet vehicles in the airport, as reported by fleet devices 124 associated with respective fleet vehicles. For example, the operational data may include an indication of the locations of fleet vehicles, a current and/or planned traveling speed of each fleet vehicle and a direction of travel, availability of fleet vehicles and/or airport staff, tasks assigned to fleet vehicles and/or airport staff, or a combination thereof.

The fleet management device controller 310 may receive operational data periodically, or in response to requesting particular types of operational data. The operational data may be received directly and/or indirectly (e.g., via the airport operations server 104) from the operational data sources 108. The operational data is received over the communication network 116.

The method 700 also includes determining, with the fleet management device controller 310, one or more tasks (e.g., a set of tasks) for a fleet device 124 based on the received operational data (at block 720). The set of tasks may otherwise be referred to as a mission. For example, responsive to receiving operational data indicating that luggage is available to be loaded onto an aircraft having an upcoming scheduled departure, the fleet management device controller 310 generates a bag transfer mission defined by a set of tasks for loading the aircraft having the upcoming departure. The set of tasks associated with loading the aircraft may include a first task to transport the luggage to the gate location of the aircraft and a second task to load the luggage onto the aircraft.

Each task may be associated with task details including a task status, such as a "complete" status indicating a task is complete, an "active" status indicating a task is active or ongoing, a "next" status, indicating a task is next in the set of tasks, a "future" status indicating a task is an upcoming task to be completed in the future, or the like.

Each task may also include task details providing additional information related to completion of the task, such as flight origin, flight destination, scheduled departure time, scheduled arrival time, and flight number of the aircraft to be loaded or unloaded. The task details may also include a completion deadline for completing the task, route instructions for completing a task, a duration of the task, and an indication of whether luggage to be transported includes hot luggage (e.g., luggage that must be moved quickly to a connecting flight).

The fleet management device controller 310 may determine the set of tasks according to an desirable execution timing for the tasks. For example, the fleet management device controller 310 may determine an execution timing for loading baggage onto an aircraft such that the baggage is not loaded until the passengers of the aircraft are enplaned. The fleet management device controller 310 may determine an execution timing for transporting unit load devices (ULDs) to aircraft according to a desirable load sequence for reduced congestion and improved loading efficiency. For example, the set of tasks may indicate that larger ULDs should be loaded first followed by smaller ULDs and/or passenger luggage.

The method 700 further includes selecting, with the fleet management device controller 310, a fleet vehicle and/or operator for execution of the mission (at block 730). The task details may include an identifier of the operator assigned to complete the task (e.g., a name or employee identification of a fleet vehicle driver, an identifier of an autonomous fleet vehicle, a name or employee identification of an airport employee assigned to load or unload an autonomous vehicle, a name or employee identification of a fleet vehicle teleoperator, etc.).

The fleet management device controller 310 may select the fleet vehicle and/or operator based on the type of task to be executed. For example, for a task to push back aircraft, the fleet management device controller 310 selects an aircraft tug rather than a shuttle bus. As another example, for a task of transporting luggage, the fleet management device controller 310 selects a baggage trolley rather than an aircraft tug or shuttle bus.

**In** some instances, the fleet management device controller 310 selects the fleet vehicle and/or operator assigned to the task based on a current availability of the fleet vehicle and/or operator and a deadline for completing the task. For example, when task completion is not urgent, the fleet management device controller 310 may assign the task as a future task for a fleet vehicle and/or operator currently executing a different task. For example, based on a current set of tasks assigned to the fleet vehicle and/or operator and an estimated amount of time to complete the assigned tasks, the fleet management device controller 310 may determine a future time at which the fleet vehicle and/or operator is estimated to be available. The fleet management device controller 310 may also determine an estimated amount of time to complete a new task and a deadline by which the new task is desired to be completed (e.g., to ensure an on-time departure). Based on the future time at which the fleet vehicle and/or operator is estimated to be available and the estimated amount of time to complete a new task, the fleet management device controller 310 may determine whether the fleet vehicle and/or operator will be able to complete the new task after completion of their current task and by the deadline of the new task. In response to determining that the fleet vehicle and/or operator will be able to complete the new task after completion of their current task and by the deadline of the new task, the fleet management device controller 310 may assign the new task to the fleet vehicle and/or operator as a future task. In response to determining that the fleet vehicle and/or operator will not be able to complete the new task after completion of their current task and by the deadline of the new task, the fleet management device controller 310 may refrain from assigning the new task to the fleet vehicle and/or operator as a future task. Instead, the fleet management device controller 310 may assign the new task to another fleet vehicle and/or operator that has greater availability (e.g., availability that is more closely aligned with a time window in which the new task is desired to be completed so as to meet the deadline of the new task). The fleet management device controller 310 determines the current availability of the fleet vehicle and/or operator based on, for example, a periodically updated list of tasks that are currently assigned to the fleet vehicle and/or operator and that is stored in the fleet management device memory 320, provided to the fleet management device controller 310 by a corresponding fleet device 124 (e.g., over the communication network 116), or provided to the fleet management device controller 310 by the airport operations server 104 (e.g., over the communication network 116). For example, the fleet management device controller 310 may receive location information about the fleet vehicle and/or operator based on information from the positioning device 460 of the fleet device 124. The fleet management device controller 310 may use this location information to determine which task of a currently-assigned set of tasks is being performed by the fleet vehicle and/or operator. Upon determining a current task that is being performed by the fleet vehicle and/or operator, the fleet management device controller 310 may be configured to determine whether the fleet vehicle and/or operator is performing their assigned tasks faster than expected, more slowly than expected, or in an expected amount of time. Such a determination may allow the fleet management device controller 310 to update an estimated time at which the fleet vehicle and/or operator will become available to perform their next task or a new task.

Alternatively or in addition, the fleet management device controller 310 may select the fleet vehicle and/or operator based on a proximity of the fleet vehicle and/or operator to a location associated with task execution (e.g., a proximity to the gate location of an aircraft to be loaded or unloaded, a proximity to a gate location of baggage or passengers to be transported, etc.). Alternatively or in addition, the fleet management device controller 310 may select the fleet vehicle and/or operator based on a charge or fuel status of available fleet vehicles (e.g., determined according to operational data received from a sensor in the fleet vehicle), a transport capacity requirement for the task, a number of vehicles and/or operators required for completion of the task, and/or an operator certification or training requirement to perform the task. For example, the fleet management device controller 310 may select the fleet vehicle (i.e., assign a set of tasks to the fleet vehicle) in response to determining that the selected fleet vehicle has a charge or fuel level above a threshold (e.g., 20% above a low-voltage or empty tank state, 30% above a low voltage or empty tank state, etc.).

In some instances, the fleet management device controller 310 selects multiple fleet vehicles and/or operators for execution of a task or set of tasks.

In some instances, the fleet management device controller 310 selects the fleet vehicle and/or operator according to an employee staffing schedule. For example, the fleet management device controller 310 may determine that a first operator is in close proximity to a task execution location, but that the first operator has an upcoming scheduled break or an upcoming shift change that may occur during or before execution of the task. In such instances, the fleet management device controller 310 may assign the task to a second operator farther from the task execution location but having a greater availability to complete the task. As another example, the fleet management device controller 310 may assign a task to a selected operator that is expected to have access to a selected fleet vehicle upon completion of a shift change (e.g., upon the selected operator starting their shift or upon another operator currently using the selected fleet vehicle ending their shift).

In some instances, the fleet management device controller 310 selects the fleet vehicle and/or operator according to current or predicted traffic flow in the airport (e.g., on the apron, the taxiway, the runway, inside terminal buildings, etc.), for example using location data received from fleet vehicles in the airport, arrival and departure schedules of aircraft, tasks currently assigned to other fleet vehicles and operators, traffic patterns determined based on historical data, and/or other operational data. Accordingly, the fleet device management controller 310 selects and assigns the set of tasks to the fleet vehicle in response to determining that the selected fleet vehicle has a shortest predicted travel time of a plurality of fleet vehicles to the task execution location. For example, the fleet management device controller 310 may determine that a first fleet vehicle and/or first operator is closer to a task execution location than a second fleet vehicle and/or second operator, but that an estimated arrival time of the second fleet vehicle and/or second operator to the task execution location is shorter than an estimated arrival time of the first fleet vehicle and/or operator. Continuing this example, the fleet management device controller 310 may make such a determination based on known or predicted locations and/or travel paths of other vehicles. For example, the first fleet vehicle may be closer to the task execution location, but the fleet management device controller 310 may determine that there is only a single path of travel for the first fleet vehicle to reach the task execution location and that the single path is blocked by a taxiing airplane that arrived early and that is waiting for its gate to become available for parking and deplaning. The fleet management device controller 310 may determine the estimated time that it will take the departing plane that is currently at the gate to push back. For example, the fleet management device controller 310 may determine the estimated time for the departing plane to push back based on: a current boarding status of the departing plane (e.g., how many passengers have currently boarded based on their boarding passes being scanned and/or how many passengers remain to be boarded based on a flight manifest), how quickly the remaining passengers are expected to board (e.g., based on historical data (e.g., average data) of boarding times for the airline, departing destination, arrival destination, time of day of flight, day of the week of the flight, and/or combinations thereof), an estimated push back time once all passengers are boarded (e.g., average push back time based on one or more of the factors listed above), and/or the like. Once the fleet management device controller 310 determines the estimated time that it will take the departing plane to push back from the gate to allow the arriving plane to park, the fleet management device controller 310 may determine whether the additional travel time for the second fleet vehicle to reach the task execution location from its further location still allows the second fleet vehicle to reach the task execution location faster than the first fleet vehicle that must wait for the arriving plane to park before proceeding on its single path of travel to the task execution location. Based on this comparison, the fleet management device controller 310 may determine which of the first fleet vehicle and the second fleet vehicle to assign the task at the task execution location. For example, when the second fleet vehicle is determined to be able to reach the task execution location faster than the first fleet vehicle based on the estimated traffic congestion as indicated above, the fleet management device controller 310 may assign the task to the second fleet vehicle and/or operator.

The estimated arrival time may be impacted by traffic congestion (e.g., aircraft waiting to park at a gate as described in the example above, aircraft backing out of a gate, aircraft crossing a section of a road, other fleet vehicles travelling on the road), a maximum allowable speed on a section of the road, a speed of the fleet vehicles (e.g., the first fleet vehicle may be slower on average than the second fleet vehicle), or the like.

The fleet management device controller 310 may also determine routes (e.g., as part of the task details described above) for navigating the selected fleet vehicle to a task execution location based on current and predicted airport traffic, otherwise referred to herein as traffic pattern aware routing. The desired/desirable route is, for example, the route having the shortest estimated travel time to a task execution location. In this manner, the fleet management device controller 310 may estimate a fastest route for completion of a task, and provide route instructions to the fleet device 124 assigned to the task. In some instances, the speed of an autonomous fleet vehicle may be included in route instructions and may be different at different parts of the route to allow for smooth flow of a traffic of many autonomous fleet vehicles to different locations. For example, the fleet management device controller 310 may determine that two autonomous fleet vehicles traveling on different routes to different locations may be approaching an intersection where their routes cross at approximately the same time. In response thereto, the fleet management device controller 310 may be configured to adjust the route instructions of each autonomous fleet vehicle to allow for continuous motion of both autonomous fleet vehicles through the intersection without stopping. For example, the fleet management device controller 310 may send updated route instructions to the first autonomous fleet vehicle that include an instruction to slow down (e.g., until the first autonomous fleet vehicle passes through the intersection). The fleet management device controller 310 may also send updated route instructions to the second autonomous fleet vehicle that include an instruction to speed up (e.g., until the second autonomous fleet vehicle passes through the intersection). The updated route instructions may prevent the autonomous fleet vehicles from passing through the intersection at the same time such that the autonomous fleet vehicles do not contact each other (i.e., avoiding a vehicular accident) and such that the autonomous fleet vehicles are both able to continuously move toward their respective task execution location without stopping so as to save fuel associated with start/stop travel/motion. As another example, the updated route instructions may change the route of one of the autonomous fleet vehicles to avoid use of the same intersection.

The method 700 further includes transmitting, with the fleet management device controller 310 over the communication network 116, mission execution instructions including an indication of the set of tasks and task details to the fleet device 124 associated with the selected fleet vehicle and/or operator (at block 740). In some instances, transmitting mission execution instructions (e.g., instructions for executing the set of tasks that define a mission) to the fleet device 124 causes the instructions to be displayed on a display screen of the fleet device 124. In some instances, the transportation system 630 of the autonomous fleet vehicle 600 is configured to operate according to the instructions for executing the set of tasks. For example, an electronic processor of the fleet device 124 and/or of the autonomous fleet vehicle 600 may be configured to control the transportation system 630 to autonomously move the fleet vehicle 600 from one task execution location to another task execution location as each task is completed. In some instances, sensing devices (e.g., one or more cameras or the like, seat pressure sensors, luggage compartment pressure sensors, etc.) are included on the autonomous fleet vehicle 600 to aid with navigation, obstacle detection, etc. and/or to determine a status of each task (e.g., to determine when each task is complete). For example, data captured by a camera may be analyzed using image/video analysis techniques to recognize human operators and determine that an assigned task has been completed (e.g., closing of a luggage compartment door of a plane that indicates loading of luggage is complete). In some instances, pressure sensors and/or cameras may determine that one or more pieces of luggage are still located in a luggage compartment/housing 610 of the autonomous fleet vehicle 600 (e.g., accidentally unloaded luggage). In response thereto, the fleet device 124 may provide a notification to an operator of the fleet vehicle 600 (e.g., via an output interface/device of the fleet device 124 such as the display screen 520 of the fleet device 124). The autonomous fleet vehicle 600 may transport human operators (e.g., operators assigned to load/unload luggage) even though the autonomous fleet vehicle 600 travels autonomously throughout the airport. In some instances, seat pressure sensors and/or cameras may determine that all operators assigned to the autonomous fleet vehicle 600 for the assigned set of tasks are back in the vehicle 600 and ready to be autonomously transported to their next task execution location, which may be indicative of a current/active task being completed.

In some instances, the selected fleet vehicle is a teleoperated fleet vehicle whose movement is controlled by an employee remote from the fleet vehicle. In such instances, the fleet management device controller 310 may transmit a first mission to a first fleet device associated with a teleoperator of the selected fleet vehicle for controlling the selected fleet vehicle to travel to a task execution location, and a second mission to a second fleet device associated with an on-the-ground airport employee for interacting with the selected fleet vehicle (e.g., loading luggage onto or off of the selected fleet vehicle).

The method 700 includes receiving, with the fleet management device controller 310, second, or updated, operational data from one or more of the airport operational data sources 108 (at block 750). The updated operational data may include mission execution data received from the fleet device 124 and related to execution progress for the mission. The mission execution data includes, for example, an indication of completion status of tasks in a mission, a location of a fleet vehicle associated with the fleet device 124, an estimated completion time of a mission, a number of bags scanned by an operator loading or unloading baggage as part of a mission task, or other operational data related to mission execution progress.

In some instances, the updated operational data includes a change of task execution location (e.g., an aircraft gate change, a carousal change, etc.), a task execution time change (e.g., caused by an early or delayed arrival/departure of a flight), a traffic pattern change (e.g., a road or operating area closure caused by flooding, spills, maintenance, etc.), or the like. For example, the updated operational data may include updated route instructions for an autonomous fleet vehicle to travel from one task execution location to another task execution location.

The method 700 may therefore include determining, with the fleet management device controller 310, a modification to the mission based on the updated operational data (at block 760), and transmitting modified mission execution instructions to the fleet device (at block 770). For example, an aircraft backing out of a gate may cause traffic congestion for fleet vehicles travelling in the apron. Accordingly, in response to traffic congestion detected by or predicted by the fleet management device controller 310 based on the airport operational data, the fleet management device controller 310 may modify a mission assigned to a fleet device 124 by determining a modified route for execution of a mission task. The modified route may direct the fleet vehicle associated with the fleet device 124 (e.g., in the case of an autonomously operated fleet vehicle) and/or the operator associated with the fleet device 124 to avoid the traffic on the apron caused by the aircraft. The amount of traffic congestion (e.g., how long it will take a departing aircraft to push back from a gate and block apron traffic) may be based on historical data (e.g., average values) of push back times for the airline, departing destination, arrival destination, time of day of flight, day of the week of the flight, and/or combinations thereof. The amount of traffic congestion may also take into account other fleet vehicles that may be blocked by a departing aircraft pushing back. For example, if multiple fleet vehicles will be blocked by the departing aircraft pushing back, a queued line of fleet vehicles may block an intersection that may further cause traffic congestion for other fleet vehicles whose routes cross through the intersection. The fleet management device controller 310 may determine the amount of traffic congestion based on the known/planned travel routes assigned to each fleet vehicle, a current location of each fleet vehicle, a traveling speed and/or direction of each fleet vehicle, the like, and/or combinations thereof.

In some instances, modifying a mission includes reassigning one or more tasks from a first fleet device 124 to a second fleet device 124 (e.g., based on traffic, location of the fleet devices 124, delays, and/or the like). In some instances, modifying a mission includes determining one or more additional tasks for the mission and/or removing one or more tasks from the mission. In some instances, modifying a mission includes modifying an execution order of tasks individual tasks in a mission. For example, in response to a delayed arrival of a flight resulting in checked baggage on the flight to go "hot" (e.g., having a connection that departs within a threshold period of time such as 30 minutes or less, 45 minutes or less, 60 minutes or less, or the like), the fleet management device controller 310 may modify a mission assigned to a fleet device 124 such that a higher priority task for transferring luggage from the delayed flight is executed before a lower priority task that was previously assigned to the fleet device 124, such as transferring luggage from an on-time or early flight.

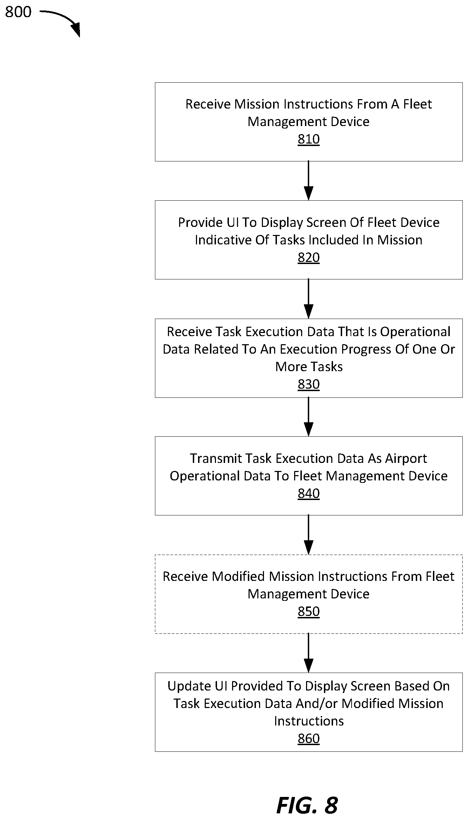

FIG. 8 illustrates a flowchart of an example method 800 for tracking execution of operational tasks at an airport. The method 800 may be performed by, for example, a fleet device 124. In the example illustrated, the method 800 includes receiving, with the fleet device controller 410, mission instructions from a fleet management device 120 (at block 810). The mission instructions defined a set of tasks to be completed by a fleet vehicle and/or operator associated with the fleet device 124, and include corresponding task details for the set of tasks, as described above.

The method 800 includes, responsive to receiving the mission instructions, providing, with the fleet device controller 410, a user interface on the display screen 520 of the fleet device 124 that simultaneously displays numerous pieces of information indicative of the tasks included in the mission and the task details associated with the tasks (at block 820). As explained previously herein, the fleet device 124 may be associated with an autonomous fleet vehicle 600 (e.g., integrated into the autonomous fleet vehicle 600, communicatively paired and removably coupled to the autonomous fleet vehicle 600 (for example, via a docking station), or the like). As illustrated in FIG. 5, the user interface provided on the display screen 520 may include a mission overview 530 including one or more task details associated with the mission. For example, the mission overview 530 may include a mission type (e.g., "Transferring Bags"), a mission completion deadline (e.g., 10:45AM), mission origin information (e.g., gate and flight information associated with a baggage transfer origin), mission destination information (e.g., gate and flight information associated with one or more baggage transfer destinations), a status of the mission (e.g., active, complete, upcoming, etc.), a planned duration of the mission, and an identification of a fleet vehicle operator (e.g., a driver) assigned to the mission. The mission overview 530 may include more or fewer task details than illustrated in the example of FIG. 5. For example, for missions involving an autonomous fleet vehicle 600, an identification of task executors such as one or more employees riding in the autonomous fleet vehicle 600 may be indicated.

The user interface provided on the display screen 520 may further include a task list 540 outlining the set of tasks (e.g., a plurality of tasks) included in a mission with corresponding status indicators of the tasks included in the mission. The task list 540 may be generated by the fleet management device controller 310 and/or the fleet device controller 410 to provide a chronological list of planned tasks to be completed during the mission. The ordering of tasks within the task list 540 may be generated to minimize travel time and/or distance between task execution locations. In the example shown, gates N11 and N17 are the two drop-off destinations for a "transferring bags" mission. Because both gates are located in the same general direction and gate N11 is located closer to the current location of the fleet vehicle 600 than gate N17, the task list may be generated to control/instruct the fleet vehicle 600 to drive to gate N11 first and then to drive to gate N17. Alternatively, the order of these two example tasks may be reversed in response to the fleet management device controller 310 and/or the fleet device controller 410 determining that the Austin flight leaving from gate N17 is scheduled to depart earlier than the Tucson flight leaving from gate N11 (e.g., by a predetermined threshold such as 15 minutes or more earlier). In this situation, the fleet management device controller 310 and/or the fleet device controller 410 may generate the task list 540 to control/instruct the fleet vehicle 600 to drive to gate N17 first and then to drive to gate N17. The task list 540 provides an overview of completed, active, and upcoming tasks assigned to the fleet device 124. As shown in FIG. 5, the task list may include a respective icon 545 corresponding to each task. The icon 545 may be updated to a checkmark in response to each task being completed (e.g., see the first two tasks in the task list 540 of FIG. 5). Also as shown in FIG. 5, the task list 540 may include a textual indication 547 of a status of each task that, for example, indicates "complete," "active," "next," "future," and/or the like. In some instances, an active task may be shown in bolded/highlighted text/icon while other tasks such as completed tasks and/or next or future tasks may be showed in a greyed-out manner. The task list 540 may include a predetermined number of completed tasks and/or a predetermined number of upcoming tasks. In some instances, the task list 540 includes all upcoming tasks assigned to the fleet device 124. In some instances, the task list 540 includes all past and/or all upcoming tasks having execution times within a predetermined time frame (e.g., all tasks completed within the past hour and/or all tasks to be completed within the next hour).

In the illustrated example, the task list 540 includes a first completed task for driving a fleet vehicle (e.g., autonomously, semi-autonomously, manually, through teleoperation, etc.) such as a baggage trolley to gate C12, a second completed task for loading the fleet vehicle with luggage from the aircraft located at gate C12 (e.g., flight AS1293 arriving from Los Angeles (LAX)) that is to be transferred to aircraft destined for Tucson and Austin, respectively. In the illustrated example, the task list 540 further includes a third active task for driving to gate N11, a fourth upcoming (e.g., next) task for unloading luggage destined for Tucson from the fleet vehicle onto the aircraft for flight AS648 to Tucson, a fifth upcoming (e.g., future) task for driving to gate N17, and a sixth upcoming (e.g., future) task for unloading baggage destined for Austin from the fleet vehicle onto the aircraft for flight AS318 to Austin.

The user interface provided on the display screen 520 may further include a route overview 550 including route instructions for navigating to task execution locations. In the illustrated example, the route overview 550 includes an interactive map indicating a current location of the fleet device 124 (e.g., location indicator 560) and highlighting a planned desirable route 570 for navigating to the next task execution location (e.g., gate N11). Although not shown in FIG. 5, in some instances, the route overview 550 may show additional planned routes to future task execution locations (e.g., future task execution locations corresponding to future tasks on the task list 540). For example, such additional planned routes may be shown in dashed line or another type of line different from the route overview 550 of a current task to distinguish the additional planned routes from the route overview 550 of the current task. The route overview 550 may also include additional task details 580 related to the active task, such as the task execution location or destination (e.g., the route to gate N11, gate N11 itself, etc.), an indication task type (e.g., travel/move to gate N11, an unload task type indicated as "Unload: TUS", etc.), an indication of a distance travelled by the fleet vehicle along the route 570 (e.g., "Miles: 0.3"), an indication of the amount of time that has been spent performing the active task (e.g., an indication of the amount of time the fleet vehicle has travelled along the route 570, for example, "Time: 00:07", an amount of time that the fleet vehicle has been parked at gate N11 for the unloading of bags, etc.), and a deadline or estimated/planned amount of time to complete an active task. As shown in FIG. 5, the additional task details 580 may be displayed in a textbox in a corner of the route overview portion 550 of the display screen 520 to allow a center of the route overview 550 and a majority of the route overview 550 to still be viewable to a user. In some instances, the additional task details may be displayed in a textbox in a different portion of the route overview 550 (e.g., in a different corner or along an edge of the route overview portion 550 of the display screen 520).

Referring again to FIG. 8, the method 800 includes receiving, with the fleet device controller 410, task execution data that is operational data related to an execution progress of one or more tasks (at block 830). The fleet device controller 410 may receive task execution data via the peripheral device connection interface 450, the fleet device input/output interface 440, the positioning device 460, or a combination thereof. For example, the peripheral device connection interface 450 may be communicatively connected to a baggage tag scanner, and the task execution data may include a number and identifier of bags scanned during execution of a loading or unloading task. As another example and as described previously herein, data captured by a camera may be analyzed using image/video analysis techniques to recognize human operators and determine that an assigned task has been completed (e.g., closing of a luggage compartment door of a plane that indicates loading of luggage is complete). As another example, seat pressure sensors and/or cameras may determine that all operators assigned to the autonomous fleet vehicle 600 for the assigned set of tasks are back in the vehicle 600 and ready to be autonomously transported to their next task execution location. Accordingly, the fleet device 124 may be configured to assume that their current task has been completed based on the operators returning to the autonomous fleet vehicle 600. As another example, the fleet device 124 may receive a user input (e.g., from an employee loading luggage onto an autonomous fleet vehicle 600) that indicates that a luggage loading task has been completed. In response to receiving the user input, the fleet device 124 may update the user interface displayed on the display screen 520 and/or transmit operational data indicative of the task completion to a fleet management device 120.

In some instances, the task execution data includes a fuel or charge level of a fleet vehicle associated with the fleet device 124, a mileage of the fleet vehicle, a speed of the fleet vehicle, and/or a location of the fleet vehicle. In some instances, the task execution data includes user input received via the fleet device input/output interface 440 indicating a completion of one or more tasks. In some instances, the task execution data includes video or image data captured by a camera installed on the fleet vehicle (e.g., a front camera, a rear camera, a dashboard camera, etc.).

The method 800 includes transmitting, with the fleet device controller 410, some or all of the task execution data as operational data to the fleet management device 120 (at block 840). The fleet device controller 410 may periodically transmit the task execution data to the fleet management device 120. Additionally or alternatively, the fleet device controller 410 may transmit the task execution data to the fleet management device 120 in response to a request from the fleet management device 120 for task execution data. Additionally or alternatively, the fleet device controller 410 may transmit the task execution data to the fleet management device 120 in response to receiving a particular type of task execution data (e.g., task execution data indicating a completion of a task (e.g., as determined in the example manners described herein, etc.), task execution data indicating a delay in completion of a task, and/or the like). In some instances, the fleet device controller 410 may determine a delay in completion of a task by determining that the task is taking longer than an expected execution time of the task. In some instances, the fleet device controller 410 may make such a determination before the expected execution time of the task has elapsed. For example, an estimated time to unload luggage may be determined based on historical data (e.g., average unloading times for a certain amount of bags at a certain airport and/or using certain unloading equipment and/or personnel and, for example, taking weather data into account). Continuing this example, a baggage scanner or other monitoring device may keep track of how many bags have been unloaded in a certain period of time. Further continuing this example, the fleet device controller 410 may determine whether the current bag unloading task is taking longer than expected/average, shorter than expected/average, or about the same as expected/average. In response to determining that the current bag unloading task is taking longer than expected/average by a predetermined amount (e.g., five minutes, ten minutes, twenty minutes, or the like), the fleet device controller 410 may transmit a notification to the fleet management device 120 that includes task execution data to indicate the delay. The fleet device controller 410 is then configured to utilize this task execution data to adjust planned times of future tasks assigned to the fleet device 124 and/or reassign one or more of the tasks previously assigned to the fleet device 124 to another fleet device 124 if the delay caused by the baggage unloading task causes undesirable delays to future tasks that could be reassigned to other fleet devices 124 for faster and/or more efficient execution. The fleet device controller 410 may also provide a notification on the fleet device 124 (e.g., on the display screen 520) to indicate to operators/employees that they took or are taking longer than expected/average to perform the task and that their future tasks may accordingly be delayed.

In some instances, the method 800 includes receiving, with the fleet device controller 410, modified mission instructions from the fleet management device 120 (at block 850). The modified mission instructions may be substantially similar to those described above with respect to FIG. 7. As indicated by the above example, the modified mission instructions may remove one or more future tasks or missions from a first fleet device 124 and reassign the one or more future tasks to a second fleet device 124 due to the delay in performing a task assigned to the first fleet device 124.

The method 800 further includes updating the user interface provided to the display screen 520 based on the task execution data (e.g., the task execution data received at block 830) and/or the modified mission instructions (e.g., the modified mission instructions received at block 850) (at block 860). For example, in response to receiving modified mission instructions indicating a new desirable route, the fleet device controller 410 may accordingly modify the route 570 displayed in the route overview 550 of FIG. 5. Similarly, in response to receiving modified mission instructions indicating a new task, a new task order, or the like, the fleet device controller 410 may accordingly modify the task list 540 displayed in the route overview 550 of FIG. 5.

In some instances, for example during execution of a baggage loading or unloading task, the fleet device controller 410 modifies the user interface provided to the display screen 520 to include a bag scanning progress (e.g., a number of bags already scanned, a number of bags remaining, and/or a total number of bags to be scanned during the loading or unloading task). In some instances, the fleet device controller 410 generates an alert (e.g., an audible alert, a notification to the display screen 520, a vibration alert, etc.) in response to detecting a missed scan of a bag. For example, based on the task execution data, the fleet device controller 410 may determine that the fleet vehicle is departing from the task execution location while only four out of five bags to be loaded or unloaded at the task execution location have been scanned. As another example and as described previously herein, pressure sensors, camera data, and/or data from other sensors/monitoring devices may be used to determine that one or more bags was/were accidentally not loaded or unloaded during and/or after execution of a task. Accordingly, the fleet device controller 410 may provide an alert indicating to the operator that a bag may have been missed.

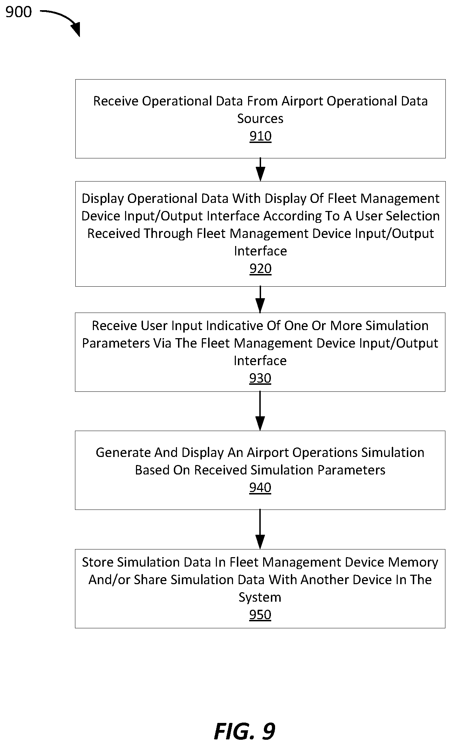

FIG. 9 illustrates a flowchart of an example method 900 for simulating operational data for an airport. The method 900 may be performed by, for example, by a fleet management device 120. The method 900 includes receiving, with the fleet management device controller 310, operational data from the airport operational data sources 108 (at block 910), and displaying the operational data with a display of the fleet management device input/output interface 340 according to a user selection received through the fleet management device input/output interface 340 (at block 920). For example, the fleet management device controller 310 may display a flight schedule for the airport, a flight schedule for a particular terminal of the airport (e.g., a user selected terminal), a flight schedule for a particular gate of the airport (e.g., a user selected gate), and/or a flight schedule for a particular airline (e.g., a user selected airline).

In some instances, using the operational data, the fleet management device controller 310 generates and displays a traffic congestion heat map for the airport, a map indicative of locations of fleet vehicles and aircrafts in the airport, a map indicative of locations of autonomous fleet vehicles in the airport, a map or chart indicative of loads (e.g., bag counts) of fleet vehicles, a map or chart indicative of task types assigned to fleet device 124, a map or chart indicative of mission types assigned to fleet device 124, or a combination thereof. The fleet management device controller 310 may display historical data associated with airport operations, such as a chart indicating fleet load over time, bags moved over time, delayed flights over time, missed bags over time, fleet capacity over time, or other indicators of airport efficiency over time. Other types of data may be included and/or associated with the above-noted historical data such as weather data, personnel data (e.g., amount of employees, specific employee identifications, times of day, day of the week, times of year (e.g., on or near a holiday), etc. In some instances, the traffic congestion heat map may indicate different colors for different amounts of fleet vehicles and/or aircrafts within a predetermined area of each other. For example, two vehicles or less within the predetermined area may be represented by the color green, five vehicles within the predetermined area may be represented by the color yellow, and ten vehicles or more within the predetermined area may be represented by the color red. A sliding scale of colors between these colors may be used to represent numbers of vehicles within the predetermined area that are between two vehicles, five vehicles, and ten vehicles.

The method 900 further includes receiving user input indicative of one or more simulation parameters via the fleet management device input/output interface 340 (at block 930). The simulation parameters may include airport operation parameters related to possible modification that can be made to the airport, the fleet management device controller 310 is configured to determine an operational impact of the simulation parameters. For example, the simulation parameters may include an increase or decrease in a number of gates, movement of a set of flights from one gate to another gate, an increase or decrease in a number of arriving or departing flights per day, an increase or decrease in a number of vehicle chargers, an increase or decrease in a number of fleet vehicles, an increase or decrease in a number of airport staff, or the like.

In some instances, the simulation parameters include stress test parameters. For example, the simulation parameters may include a predetermined number of delayed arriving flights, a predetermined number of delayed outgoing flights, a predetermined number of employees on vacation or out sick, or other adverse factors that may affect airport operational efficiency. The fleet management device controller 310 may also display staffing data associated with airport staff, such as training data, scheduling data, task execution efficiency data, safety data, or the like.

The method 900 includes generating, with the fleet management device controller 310, and displaying, to the fleet management device input/output interface 340, an airport operations simulation based on the received simulation parameters (at block 940). The fleet management device controller 310 may make modifications to the operational data displayed at block 920 such that the operational data is indicative of simulated operational data according to simulation parameters.

For example, the fleet management device controller 310 may display a simulated flight schedule for the airport, a simulated flight schedule for a particular terminal of the airport, a simulated flight schedule for a particular gate of the airport (e.g., a user selected gate), and/or a simulated flight schedule or a particular airline (e.g., a user selected airline).

The fleet management device controller 310 may display a simulated traffic congestion heat map for the airport during a user-selected time of day or year and according to the simulation parameters, a simulated map indicative of locations of fleet vehicles and aircrafts in the airport during a user-selected time of day or year and according to the simulation parameters, a simulated map indicative of locations of autonomous fleet vehicles in the airport during a user-selected time of day or year and according to the simulation parameters, a simulated map or chart indicative of loads of fleet vehicles during a user-selected time of day or year and according to the simulation parameters, a simulated map or chart indicative of task types assigned to fleet device 124 during a user-selected time of day or year and according to the simulation parameters, a simulated map or chart indicative of mission types assigned to fleet device 124 during a user-selected time of day or year and according to the simulation parameters, or a combination thereof.

The fleet management device controller 310 may display simulated data associated with airport operations, such as a chart indicating fleet load over time according to the simulation parameters, bags moved over time according to the simulation parameters, delayed flights over time according to the simulation parameters, missed bags over time according to the simulation parameters, fleet capacity over time according to the simulation parameters, or other indicators of airport efficiency over time.

In some instances, the fleet management device controller 310 may determine the simulated data and/or simulated maps based on the simulation parameters entered by the user on the fleet management device 120 and based on historical data (e.g., average values) of operational data of the airport, the gate, the airline, etc. In some instances, the average values may be overall average values for the airport, the gate, the airline, etc. In some instances, the average values used to determine simulated data and/or simulated maps are based on the simulation parameters and/or current operational parameters. For example, the simulation parameters or current operational parameters may indicate that the simulation should be determined for a Tuesday in October or for a certain holiday. As another example, the simulation parameters or current operational parameters may indicate that snow or rain is in the forecast and/or may indicate a certain number of employees will be working. When determining the simulated data and/or simulated maps, the fleet management device controller 310 may take averages of historical data with the same or similar operational parameters to determine an accurate simulation. In other words, historical data of airport operations on the day before Thanksgiving may be different than that on a Tuesday in April. Accordingly, historical data with the same or similar operational parameters may be leveraged to generate the simulated data and/or simulated maps. In some instances, the fleet management device controller 310 may additionally use general historical data to determine the simulated data and/or simulated maps, for example, when determining how increasing or decreasing an employee count, an equipment count, etc. affects operational efficiency. Accordingly, the fleet management device controller 310 may determine the simulated data and/or simulated maps based on specific historical data that was gathered in a similar use case as a current situation/simulation (e.g., similar weather, same day of the week, similar time of the year, same airline, same gate, same airport, similar number of employees and/or equipment, same employees (i.e., employee IDS) and/or equipment, etc.) and/or based on general historical data that was gathered in a different use case as the current situation/simulation but that is applicable to a change in simulation parameters made via user input.

The method 900 also includes storing, with the fleet management device controller 310, the simulation data in the fleet management device memory 320, and/or sharing, with the fleet management device controller 310, the simulation data with another device in the system 100, such as the airport operations server 104 or another fleet management device 120 (at block 950).

The methods 700, 800, and 900 illustrate only example embodiments. The blocks described with respect to these methods need not all be performed or performed in the same order as described to carry out the method. One of ordinary skill in the art appreciates that the methods 700, 800, and 900 may be performed with the blocks in any order or by omitting certain blocks altogether.

Thus, embodiments described herein provide systems and methods for autonomous vehicle operation in an airport. Various features and advantages of the embodiments are set forth in the following aspects:

## Claims

1. An airport operations management system comprising:
a fleet management device including an electronic processor configured to:
receive first operational data from an airport operational data source,
based on the first operational data, determine a set of tasks for transporting aircraft baggage,
based on the first operational data, determine a predicted traffic flow of a plurality of fleet vehicles and a plurality of aircrafts operating in an airport,
based on the predicted traffic flow, assign the set of tasks to a fleet device associated with an autonomous fleet vehicle of the plurality of fleet vehicles, and
transmit instructions for executing the set of tasks to the fleet device, wherein transmitting the instructions for executing the set of tasks to the fleet device causes the instructions to be displayed on a display screen of the fleet device; and
the autonomous fleet vehicle including a transportation system configured to operate according to the instructions for executing the set of tasks.

2. The airport operations management system of claim 1, wherein the electronic processor is further configured to:
based on the predicted traffic flow, determine a desired route for navigating the autonomous fleet vehicle to a task execution location for the set of tasks,
wherein the instructions for executing the set of tasks include the desired route.

3. The airport operations management system of claim 2, wherein the electronic processor is configured to assign the set of tasks to the fleet device associated with the autonomous fleet vehicle in response to determining that the autonomous fleet vehicle has a shortest predicted travel time of the plurality of fleet vehicles to the task execution location.

4. The airport operations management system of claim 2, wherein the first operational data includes a baggage manifest, and the electronic processor is configured to assign the set of tasks to the fleet device associated with the autonomous fleet vehicle in response to determining that aircraft baggage has a connection that departs within a threshold period of time and in response to determining that the autonomous fleet vehicle is available to complete the set of tasks within the threshold period of time.

5. The airport operations management system of claim 2, wherein the first operational data includes charge or fuel information of the plurality of fleet vehicles, and the electronic processor is configured to assign the set of tasks to the fleet device associated with the autonomous fleet vehicle in response to determining that the autonomous fleet vehicle has a charge or fuel level above a threshold.

6. The airport operations management system of claim 2, wherein the task execution location is a first gate location of a first aircraft with bags to be unloaded, and wherein the set of tasks includes a first task for driving to the first gate location, a second task for unloading selected baggage from the first aircraft, a third task for driving to a second gate location of a second aircraft, and a fourth task for loading the selected baggage onto the second aircraft.

7. The airport operations management system of claim 2, wherein the electronic processor is further configured to:
receive second operational data from the airport operational data source,
based on the second operational data, modify the desired route, and
transmit modified instructions for executing the set of tasks, the modified instructions including a modified desired route;
wherein the second operational data includes at least one selected from a group consisting of:
task execution data received from the fleet device and associated with an execution progress of the set of tasks,
a gate location change,
a flight arrival time change,
a flight departure time change, and
a traffic pattern change.

8. A method for airport operations management, the method comprising:
receiving, with an electronic processor of a fleet management device, first operational data from an airport operational data source;
based on the first operational data, determining, with the electronic processor, a set of tasks for transporting aircraft baggage;
based on the first operational data, determining, with the electronic processor, a predicted traffic flow of a plurality of fleet vehicles and a plurality of aircrafts operating in an airport;
based on the predicted traffic flow, assigning, with the electronic processor, the set of tasks to a fleet device associated with an autonomous fleet vehicle of the plurality of fleet vehicles;
transmitting, with the electronic processor via a transceiver of the fleet management device, instructions for executing the set of tasks to the fleet device, wherein transmitting the instructions for executing the set of tasks to the fleet device causes the instructions to be displayed on a display screen of the fleet device; and
operating a transportation system of the autonomous fleet vehicle according to the instructions for executing the set of tasks.

9. The method of claim 8, further comprising:
based on the predicted traffic flow, determining, with the electronic processor, a desired route for navigating the autonomous fleet vehicle to a task execution location for the set of tasks,
wherein the instructions for executing the set of tasks include the desired route.

10. The method of claim 9, wherein assigning the set of tasks to the fleet device associated with the autonomous fleet vehicle is performed in response to determining that the autonomous fleet vehicle has a shortest predicted travel time of the plurality of fleet vehicles to the task execution location.

11. The method of claim 9, wherein the first operational data includes a baggage manifest, and wherein assigning the set of tasks to the fleet device associated with the autonomous fleet vehicle is performed in response to determining that aircraft baggage has a connection that departs within a threshold period of time and in response to determining that the autonomous fleet vehicle is available to complete the set of tasks within the threshold period of time.

12. The method of claim 9, wherein the first operational data includes charge or fuel information of the plurality of fleet vehicles, and wherein assigning the set of tasks to the fleet device associated with the autonomous fleet vehicle is performed in response to determining that the autonomous fleet vehicle has a charge or fuel level above a threshold.

13. The method of claim 9, wherein the task execution location is a first gate location of a first aircraft with bags to be unloaded, and wherein the set of tasks includes a first task for driving to the first gate location, a second task for unloading selected baggage from the first aircraft, a third task for driving to a second gate location of a second aircraft, and a fourth task for loading the selected baggage onto the second aircraft.

14. The method of claim 9, further comprising:
receive second operational data from the airport operational data source,
based on the second operational data, modify the desired route, and
transmit modified instructions for executing the set of tasks, the modified instructions including a modified desired route;
wherein the second operational data includes at least one selected from a group consisting of:
task execution data received from the fleet device and associated with an execution progress of the set of tasks,
a gate location change,
a flight arrival time change,
a flight departure time change, and
a traffic pattern change.
